Europäisches Patentamt

European Patent Office ·

Office européen des brevets

(19)

(11) Numéro de publication: **0 054 454**
**B1**

(12) **FASCICULE DE BREVET EUROPEEN**

(45) Date de publication du fascicule du brevet: **19.06.85**

(51) Int. Cl.⁴: **B 25 J 11/00, F 15 B 15/12**

(21) Numéro de dépôt: **81401802.4**

(22) Date de dépôt: **17.11.81**

(54) Articulation à motorisation hydraulique.

(30) Priorité: **16.12.80 FR 8026638**

(43) Date de publication de la demande:
**23.06.82 Bulletin 82/25**

(45) Mention de la délivrance du brevet:
**19.06.85 Bulletin 85/25**

(84) Etats contractants désignés:
**DE GB IT**

(56) Documents cités:
**FR-A-1 339 500**
**FR-A-1 566 787**
**FR-A-2 119 084**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Fayolle, Michel**
**11, Sente de la Tour-Fine**
**F-95220 Herblay (FR)**

(74) Mandataire: **Ernst-Schonberg, Michel et al**
**R.N.U.R. S. 0804 B.P. 103 8 & 10, avenue Emile-Zola**
**F-92109 Boulogne Billancourt (FR)**

Courier Press, Leamington Spa, England.

## Description

La présente invention concerne une articulation à motorisation hydraulique entre un élément amont comprenant un premier flasque fine amount et un deuxième flasque fixe aval et un élément aval côtoyant le deuxième flasque ces éléments étant susceptibles de se déplacer relativement l'un par rapport à l'autre sous la commande d'un vérin rotatif à palette tournante constitué par un arbre tournant comportant des canaux de fluide de deux voies de pression et de retour entre lesdits éléments amont et aval et un joint d'étanchéité disposé entre le premier flasque fixe et l'arbre tournant, un joint d'étanchéité disposé entre le premier flasque fixe et la palette tournante, un joint d'étanchéité disposé entre le deuxième flasque fixe et l'arbre tournant, un joint d'étanchéité disposé entre le deuxième flasque fixe et la palette tournante et un joint d'étanchéité disposé entre l'arbre tournant et le deuxième flasque fixe aval de l'articulation.

Une telle articulation comprend généralement des organes remplissant trois fonctions:

— le guidage d'un des éléments par rapport à l'autre (paliers lisses ou à corps roulants, palier hydrostatique...);
— la motorisation (vérin linéaire ou rotatif, moteur hydraulique) et éventuellement une transmission mécanique entre l'organe moteur et les éléments qu'il anime;
— le passage du fluide vers les éléments situés en aval de l'articulation.

Ces articulations à actionnement hydraulique sont utilisées pour de nombreuses applications:

— bras de chargement de machine-outils, de presses, de fours;
— machines fixes ou mobiles poly-articulées: robots industriels, grues, engins de travaux publics.

L'invention se rapporte particulièrement à l'actionnement de bras de robots industriels pour lesquels les masse et encombrement de l'articulation doivent être les plus réduits possible, et ce d'autant plus que l'articulation se situe en aval de la structure du robot. En effet, la masse de chaque articulation doit être mue par l'articulation amont et, par un effet de cascade une diminution de la masse des actionneurs permet de réduire la puissance installée.

Dans les articulations existantes, notamment en robotique industrielle, les trois fonctions énoncées ci-dessus sont remplies par trois ou quatre types d'organes:

— le guidage par des paliers, en général à corps roulants,
— la motorisation par un récepteur hydraulique qui comporte ses propres paliers,
— le passage du fluide vers les articulations aval à l'aide de tuyauteries flexibles,

— éventuellement des organes de transmission (réducteur, bielle-manivelle, chaîne...) entre l'organe moteur et l'axe qu'il anime.

C'est le cas des robot de soudure "RENAULT-ACMA" (marque déposée) de capacité 80 kg où les actionneurs sont des moteurs hydrauliques rapides actionnant chacun, au travers d'un réducteur mécanique, un axe muni de ses paliers, alors que la liaison vers les axes situés en aval s'effectue par tuyauteries flexibles. C'est également le cas pour les robots de peinture "RENAULT-ACMA" pour lesquels les actionneurs sont, hormis le premier axe, de vérins linéaires actionnant les différents axes directement ou par l'intermédiaire de systèmes à pignon-crémaillère.

L'invention a pour but la réalisation d'une articulation à motorisation hydraulique:

— d'encombrement et de masse réduits grâce au regroupement des fonctions de guidage, de motorisation et de passage de fluide hydraulique dans un seul organe;
— de construction économique, grâce à l'intégration de plusieurs fonctions dans l'actioneur et à l'animation directe de l'axe par cet actionneur, sans organe mécanique intermédiaire.

On connaît par le brevet FR—A—1 566 787 un vérin rotatif du type comportant un arbre central portant au moins une palette radiale mobile entre deux positions de butée qui sépare deux chambres de fluide et des canaux de fluide de deux voies de pression et de retour. Dans ce type de vérin, la plupart des joints d'étanchéité du vérin disposés par exemple entre la palette et des flasques radiaux ne se trouvent pas sur le trajet des voies de pression et de retour. Il s'ensuit que lesdites voies doivent comporter des joints d'étanchéité complémentaires dont la mise en place nécessite des usinages et augmente l'encombrement d'ensemble du vérin.

Suivant la présente invention, l'articulation à motorisation hydraulique du type selon le préambule de la revendication unique est caractérisée par le fait que le joint d'étanchéité disposé entre l'arbre tournant et le deuxième flasque fixe aval de façon à assurer l'étanchéité entre l'arbre tournant et ce flasque au niveau de la face de ce dernier flasque tournée vers l'élément aval, coopère conjointement avec le joint d'étanchéité disposé entre le deuxième flasque fixe et l'arbre tournant à l'isolement entre le canal de la voie de retour et la voie de pression tandisque la part de la voie de pression réalisée dans l'arbre tournant et l'élément aval est isolée par l'ensemble des autres joints.

Suivant une caractéristique particulière de réalisation, les paliers du vérin rotatif forment également paliers de guidage du bras amont par rapport au bras aval.

Suivant un autre caractéristique de réalisation l'articulation à motorisation hydraulique suivant l'invention, qui comporte un arbre de liaison et d'entraînement et une palette, est remarquable en ce que ladite palette est centrée et positionnée angulairement par rapport au dit arbre dont elle peut être désolidarisée.

D'autres caractéristiques ressortiront de la description qui suit et qui n'est donnée qu'à titre d'exemple. A cet effet on se rapportera aux dessins joints dans lesquels:

— la figure 1 est une représentation en coupe suivant un plan passant par l'axe de symétrie longitudinale d'un premier mode de réalisation d'une articulation, suivant la présente invention, dont l'axe est confondu ou parallèle avec celui d'un au moins des bras amont et aval.
— les figures 2 et 3 représentent respectivement des coupes de l'articulation de la figure 1 suivant des plans de traces II—II et III—III sur la figure 1;

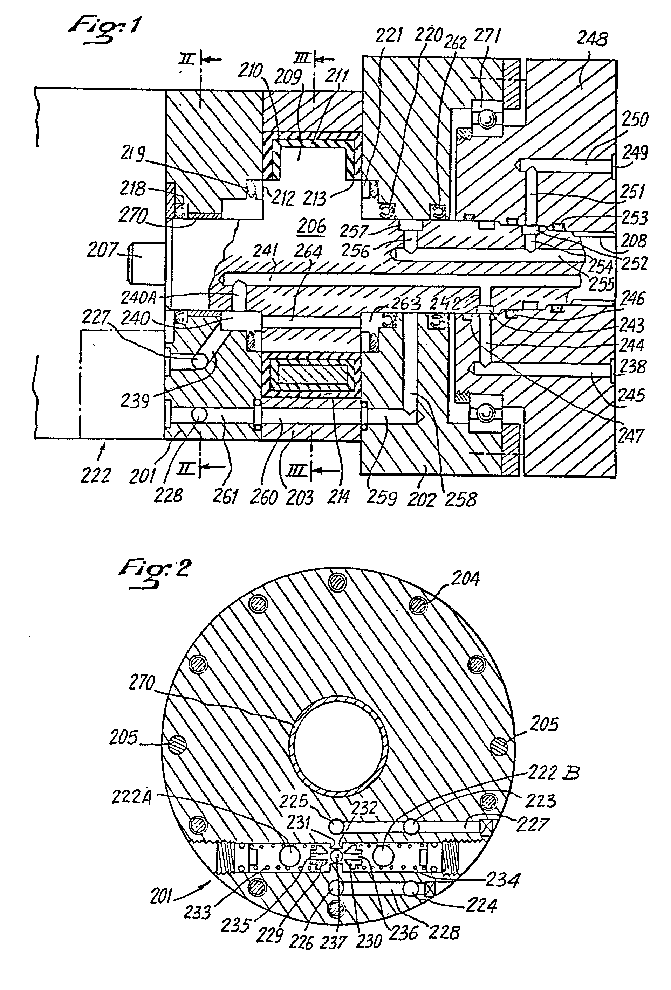

Sur le mode de réalisation illustré aux figures 1 à 3 on reconnaît les différents éléments suivants constituants un vérin rotatif d'asservissement:

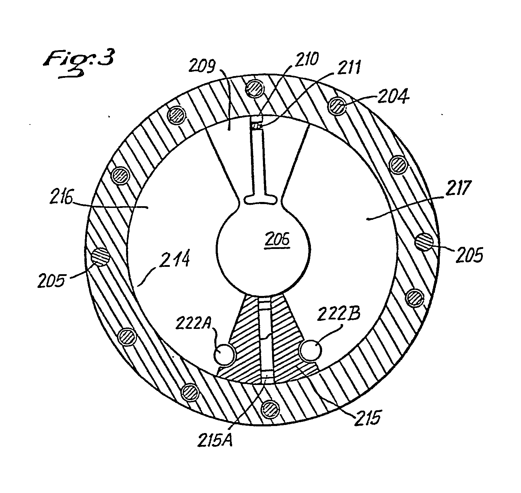

— un élément amont comprenant un premier flasque fine amount 201 et un deuxième flasque fixe aval 202 supports du bras amont sont séparés par une came 203. Ces deux flasques sont rendus solidaires de la came 203 par des boulons 204 et positionnés par rapport à celle-ci par des pieds de centrage 205;
— un arbre tournant 206 muni à ses extrémités d'un têton 207 d'entraînement d'un capteur de position angulaire et de cannelures 208 d'entraînement du plateau support 248 du bras aval. Une palette tournante (figure 3) 209 est solidaire de l'arbre 206 et comprend des joints d'étanchéité 210, 211 entre la palette 209 et les faces 212, 213 des flasques 201, 202 d'une part, la palette 209 et l'alésage 214 de la came 203 d'autre part;
— une butée 215 (figure 3) munie de joints d'étanchéité 215 A, limitant les débattements angulaires de la palette 209 et coopérant avec les flasques 201, 202 et la came 203 pour délimiter deux chambres 216, 217 (figure 3);
— un joint d'étanchéité 218 disposé entre le premier flasque fixe 201 et l'arbre tournant 206, un joint d'étanchéité 219 disposé entre le premier flasque fixe 201 et la palette tournante 209 d'une part, et un joint d'étanchéité 220 disposé entre le deuxième flasque fixe 202 et l'arbre tournant 206, un joint d'étanchéité 221 disposé entre le deuxième flasque fixe 202 et l'arbre tournant 206 d'autre part limitent les débits de fuite entre les chambres 216 et 217, et de ces chambres vers les extrémités de l'arbre d'entraînement 206;
— un organe de commande 222 (figure 1) des déplacements angulaires de l'arbre du vérin rotatif, classiquement une servovalve électro-hydraulique. Cet organe est relié à une source d'alimentation hydraulique sous pression par deux orifices 223, 224 (figure 2) mis en communication avec les orifices 225, 226 propres à l'organe de commande par des perçages 227, 228. La liaison entre l'organe de commande 222 (figure 1) et les chambres 216, 217 s'effectue par l'intermédiaire des orifices 222 A et 222 B (figure 3);
— un dispositif de limitation de la pression différentielle entre les chambres 216, 217 du vérin rotatif comprend deux clapets 229, 230 rappelés sur des sièges 231, 232 par des ressorts 233, 234 et comprenant un orifice central 235, 236 pouvant être obturé par une bille 237.

Les particularités du vérin rotatif formant articulation suivant la présente invention tiennent notamment dans la réalisation d'un double joint tournant pour le transport des fluides vers le bras aval supporté par le plateau 248, qui s'effectue:

— pour la liaison "ALLER" de l'orifice 223 (figure 2) à l'orifice 238 (figure 1) alimentant en pression l'axe aval par l'intermédiaire de perçages 227, 239 (figure 1), de la gorge 240 située entre les joints d'étanchéïté 218 et 219 situés dans le flasque 210, des perçages 240 A, 241, 242 réalisés dans l'arbre 206, de la gorge 243 et des perçages 244, 245. Des joints d'étanchéïté statique 246, 247 assurent le passage sans fuite de l'arbre 206 au plateau 248 support du bras.

On réalise donc ainsi, d'une part la liaison entre l'orifice "pression" 227 et l'organe de commande 222 du vérin rotatif d'autre part la liaison tournante entre ce même orifice 227 et celui 238 d'alimentation sous pression du bras, sans utiliser d'autre joint d'étanchéité dynamique que ceux (218, 219) propres au vérin rotatif.

— pour la liaison "Retour" de l'orifice 249 du plateau 248 à l'orifice retour 224 (figure 2) par l'intermédiaire des perçages 250, 251, de la gorge 252, rendue étanche par les joints statiques 246 et 253, des perçages 254, 255 et 256 ménagés dans l'arbre 206, de la gorge 257 et des perçages 258, 259, 260 et 261.

Le liaison tournante entre le flasque 202 et l'arbre 206 est rendue étanche grâce aux deux joints d'étanchéïté dynamique 220 et 262. Le premier 220 faisant partie du dispositif d'étanchéïté du verin, cette liaison tournante ne nécessite donc qu'un joint dynamique supplémentaire (262), lequel est disposé entre l'arbre Fournant et la face du deuxième flasque 202 tournée vers l'élément aval. L'alimentation sous pression de l'espace intermédiaire 263 se fait, à partir de la gorge 240 par un perçage 264 au travers de l'épaulement de l'arbre 206.

Une autre particularité de ce vérin rotatif formant articulation est que les paliers 270, 271 de l'articulation et de l'organe moteur (le vérin rotatif) sont confondus. Ces paliers peuvent être de différents types: à corps roulants (à billes, à rouleaux), lisses avec ou sans équilibrage hydraulique.

On a donc réalisé une articulation mue par un vérin rotatif hydraulique intégrant les fonctions de palier et de passage du fluide vers les axes situés en aval.

En résumé, la version illustrée par les figures 1 à 3, rempli bien la triple fonction nécessaire à une articulation de robot industriel:

— motorisation, par un vérin rotatif, actionnant le bras aval, sans transmission mécanique intermédiaire, et comprenant des organes de limitation de pression (figure 2) et l'implantation nécessaire à la fixation et au raccordement de l'organe de commande 222;
— centrage d'un bras par rapport à l'autre et de l'arbre du vérin rotatif par rapport à son corps à l'aide des mêmes paliers 270, 271.
— passage du fluide de l'amont vers l'aval avec un joint tournant à deux voies dont la réalisation ne nécessite qu'un joint d'étanchéité dynamique en plus ce ceux propres au dispositif d'étanchéité du vérin rotatif.

## Revendication

Articulation à motorisation hydraulique entre un élément amont comprenant un premier flasque fixe amont (201) et un deuxième flasque fixe aval (202) et un élément aval (248) côtoyant la deuxième flasque, ces éléments êtant susceptibles de se déplace relativement l'un par rapport à l'autre, sous la commande d'un vérin rotatif à palette tournante (209) constitué par un arbre tournant (206) portant des canaux de fluide (241, 255) de deux voies de pression et de retour qui lient hydrauliquement lesdits éléments amont (201, 202) et aval (248), un joint d'étanchéité (218) disposé entre le premier flasque fixe (201) et l'arbre tournant (206), un joint d'étanchéité (219) disposé entre le premier flasque fixe (201) et la palette tournante (209), un joint d'étanchéité (220) disposé entre la deuxième flasque fixe (202) et l'arbre tournant (206), un joint d'étanchéité (221) disposé entre le deuxième flasque fixe (202) et la palette tournante (209) et un joint d'étanchéité (262) disposé entre l'arbre tournant (206) et le deuxième flasque fixe aval de l'articulation caractérisée par le fait que le joint d'étanchéité (262) disposé entre l'arbre tournant (206) et le deuxième flasque fixe aval (202) de façon à assurer l'étanchéité entre l'arbre tournant (206) et ce flasque (202) au, niveau de la face de ce dernier flasque tournie vers l'élément aval (248) de coopère conjointement avec le joint d'étanchéité (220) disposé entre le deuxième flasque fixe (202) et l'arbre tournant (206) à l'isolement entre le canal (255) de la voie de retour et la voie de pression tandique la part (241) de la voie de pression réalisée dans l'arbre tournant (206) et l'élément aval est isolée par l'ensemble des autres joints (218, 219, 220, 221).

## Patentanspruch

Hydraulisch angetriebenes Gelenk zwischen einem hochdrcukseitigen Teil, das einen ersten feststehenden hockdruckseitigen Flansch (201) und einen zweiten niederdruckseitigen feststehenden Flansch (202) aufweist une einen niederdruckseitigen Teil (248), das den zweiten Flansch bedeckt, wobei diese Teile relativ zueinander verschiebbar sind mittels Steuerung durch einen Drehzylinder (209) mit Drehschaufel, der aus einer drehbaren Welle (206) besteht, die Zwei-Weg-Fluidkanäle (241, 255) für Druck und Entspannung trägt, welche die hochdruckseitigen Teile (201, 202) und die niederdruckseitigen Teile (248) hydraulisch verbinden, wobei eine Dichtung (218) zwischen dem ersten feststehenden Flansch (201) und der drehbaren Welle (206) angeordnet ist, eine Dichtung (219) zwischen dem ersten feststehenden Flansch (201) und der drehbaren Schaufel (209) angeordnet ist, eine Dichtung (220) zwischen dem zweiten feststehenden Flansch (202) und der drehbaren Welle (206) angeordnet ist, eine Dichtung (211) zwischen dem zweiten feststehenden Flansch (202) und der drehbaren Schaufel (209) angeordnet ist und eine Dichtung (262) zwischen der drehbaren Welle (206) und dem zweiten, feststehenden, niederdruckseitigen Flansch (202) des Gelenks angeordnet ist, dadurch gekennzeichnet, daß die zwischen der drehbaren Welle (206) und dem zweiten feststehenden niederdruckseitigen Flansch (202) angeordnete Dichtung (262), die die Abdichtung zwischen der drehbaren Welle (206) und dem Flansch (202) auf Höhe der dem niederdruckseitigen Teil (248) des Gelenks zugewandten Fläche des letzteren Flansches gwährleistet, mit der zwischen dem zweiten feststehenden Flansch (202) und der drehbaren Welle (206) angeordneten Dichtung (220) zusammenwirkt, im Hinblick auf die Isolierung zwischen dem Kanal (255) des Entspannungswegers und dem Druckweg während der Abschnitt (241) des in der drehbaren Welle (206) ausgebildeten Druckweges und das niederdruckseitige Teil durch die Gesamtheit der anderen Dichtungen (218, 219, 220, 221) isoliert ist.

## Claim

A pivot having hydraulic motorisation between an upstream element comprising a first fixed upstream side plate (201) and a second fixed downstream side plate (202) and a downstream element (248) disposed beside the second side plate, said elements being capable of being displaced relative to each other under the control of a rotary jack having a rotary vane (209), said jack comprising a rotary shaft (206) bearing fluid ducts (241, 255) of two pressure and return ways which hydraulically connect said upstream element (201, 202) and said downstream element (248), a sealing member (218) disposed between the first fixed side plate (201) and the rotary shaft (206), a sealing member (219) disposed between the first fixed side plate (201) and the rotary vane (209), a sealing member (220) disposed between the second fixed side plate (202) and the rotary shaft (206), a sealing member (221) disposed between the second fixed side plate (202) and the rotary vane (209) and a sealing member (262) disposed between the rotary shaft (206) and the second fixed downstream side plate (202) of the pivot characterised in that the sealing member (262) disposed between the rotary shaft (206) and the second fixed downstream side plate (202) so as to provide a seal between the rotary shaft (206) and the side plate (202) at the level of the face of the latter side plate which is towards the downstream element (248) co-operates conjointly with the sealing member (220) disposed between the second fixed side plate (202) and the rotary shaft (206) for isolation between the duct (255) of the return way and the pressure way while the part (241) of the pressure way which is provided in the rotary shaft (206) and the downstream element is isolated by the assembly of the other sealing members (218, 219, 220, 221).

0 054 454

Fig. 1

Fig. 2

Fig.3